(19) Europäisches Patentamt
European Patent Office
Office européen des brevets

(11) Veröffentlichungsnummer: **0 057 439**
**A2**

(12) # EUROPÄISCHE PATENTANMELDUNG

(21) Anmeldenummer: **82100622.8**

(22) Anmeldetag: **29.01.82**

(51) Int. Cl.³: **C 09 B 67/38**, C 09 B 67/04, C 09 B 67/46, D 06 P 1/613

(30) Priorität: **31.01.81 DE 3103292**

(43) Veröffentlichungstag der Anmeldung: **11.08.82 Patentblatt 82/32**

(84) Benannte Vertragsstaaten: **CH DE FR GB IT LI**

(71) Anmelder: **CASSELLA Aktiengesellschaft, Hanauer Landstrasse 526, D-6000 Frankfurt am Main 61 (DE)**

(72) Erfinder: **Hett, Helmut, Langstrasse 6, D-6050 Offenbach(M)-Bürgel (DE)**
Erfinder: **Hofmann, Klaus, Meerholzerstrasse 80, D-5000 Frankfurt am Main 61 (DE)**
Erfinder: **Keil, Karl-Heinz, Dr., Konrad Adenauer Strasse 26, D-6050 Offenbach(M)-Bieber (DE)**

(74) Vertreter: **Urbach, Hans-Georg, Dr. et al, Hanauer Landstrasse 526, D-6000 Frankfurt am Main 61 (DE)**

(54) **Stabile Farbstoffzubereitungen, ihre Herstellung und Verwendung.**

(57) Stabile Farbstoffzubereitungen von feinverteilten in Wasser schwerlöslichen oder unlöslichen Farbstoffen, Wasser, einem oder mehreren bekannten und üblichen Zusatzstoffen wie Dispergier-, Netz- und Konservierungsmitteln, enthalten 5 bis 75 Gew.-%, bezogen auf das Gewicht des in der Zubereitung enthaltenen Farbstoffs, eines Hilfsmittels der allgemeinen Formel I

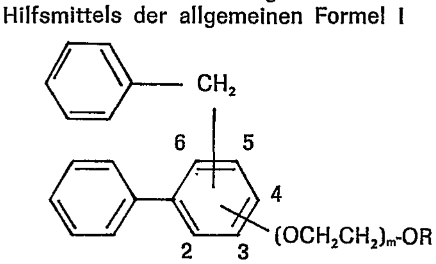

worin der Substituent $-(OCH_2CH_2)_m-OR$ in 2- oder 4-Stellung des Diphenyls steht,
m eine Zahl von 7 bis 20 und R Wasserstoff oder ein Rest der Formel II

$$-C_nH_{2n}-COO^{\ominus}X^{\oplus} \qquad (II)$$

bedeutet, wobei n eine Zahl von 1 bis 4 ist und X für Wasserstoff ein Alkalimetallkation, $NH_4^{\oplus}$, ein Mono-, Di- oder Trialkyl- oder Hydroxyalkylammoniumkation mit 1 bis 4 C-Atomen in den Alkylgruppen steht.

Sie lassen sich besonders leicht herstellen und haben anwendungstechnische Vorteile gegenüber vergleichbaren bekannten Produkten.

EP 0 057 439 A2

0057439
Ref. 3205
Dr. Va/lro

"Stabile Farbstoffzubereitungen, ihre Herstellung und Verwendung"

Die vorliegende Erfindung betrifft stabile Farbstoffzubereitungen von feinverteilten in Wasser schwerlöslichen oder unlöslichen Farbstoffen, Wasser, einem oder mehreren bekannten und üblichen Zusatzstoffen wie Dispergier-, Netz- und Konservierungsmitteln, mit einem Gehalt von 5 bis 75 Gew.%, bezogen auf das Gewicht des in der Zubereitung enthaltenen Farbstoffs, eines Hilfsmittels der allgemeinen Formel I

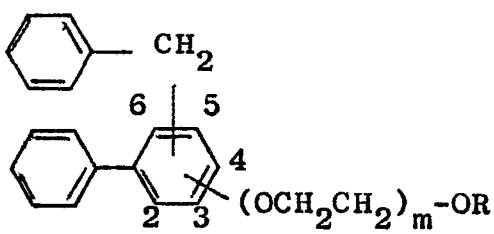

worin der Substituent $-(OCH_2CH_2)_m$ -OR in 2 oder 4-Stellung des Diphenyls steht,
m eine Zahl von 7 bis 20 und R Wasserstoff oder ein Rest der Formel II

$$-C_nH_{2n}-COO^{\ominus} X^{\oplus} \qquad (II)$$

bedeutet, wobei n eine Zahl von 1 bis 4 ist und X für Wasserstoff ein Alkalimetallkation, $NH_4^{\oplus}$ , ein Mono-, Di- oder Trialkyl- oder Hydroxyalkylammoniumkation mit 1 bis 4 C-Atomen in den Alkylgruppen steht.

Die erfindungsgemäßen Zubereitungen lassen sich besonders leicht herstellen und haben wesentliche anwendungstechnische Vorteile gegenüber vergleichbaren bekannten Produkten.

In Wasser schwer lösliche oder unlösliche Farbstoffe werden in der Technik in sehr großem Umfang zum Kolorieren, d.h. zum Färben und Bedrucken von Textilmaterialien eingesetzt, die aus hydrophoben synthetischen Fasern bestehen oder solche Fasern in hohem Anteil enthalten. Im Hinblick auf die hohe Bedeutung derartiger Textilmaterialien kommt auch den entsprechenden Färbeverfahren und den dazu verwendeten Farbstoffen eine erhebliche technische Bedeutung zu. Alle technischen Färbe- und Druckverfahren für hydrophobe Textilmaterialien laufen darauf hinaus, daß die in Wasser schwer löslichen oder unlöslichen Farbstoffe in feinster Verteilung gleichmäßig mit dem Gewebe in Berührung gebracht werden und unter Hitzeeinwirkung in die Faser eindiffundieren, sich quasi darin lösen. Die Anwendbarkeit eines in Wasser schwer löslichen oder unlöslichen Farbstoffs, eines sogenannten Dispersionsfarbstoffs, zum Kolorieren solcher Gewebe steht und fällt somit mit der Möglichkeit, diesen Farbstoff in eine ausreichend feine Verteilung zu überführen und diese Feinverteilung so zu stabilisieren, daß sie auch bei längerer Lagerung des Farbstoffs sowie während der beim Färbe- bzw. Druckvorgang durchgeführten Hitzebehandlung erhalten bleibt. Es hat sich gezeigt, daß diese Forderung nur dann erfüllbar ist, wenn die Farbstoffe einem sogenannten Finish unterworfen werden, wobei sie in Gegenwart von bestimmten Hilfsmitteln soweit gemahlen werden, daß ca. 80 bis 90 % der Farbstoffteilchen kleiner sind als 1 µ. Sofern diese Voraussetzungen für die Korngröße der Farbstoffe gegeben sind, wird im folgenden kurz von einer Korngröße kleiner 1 µ gesprochen. Sowohl beim Mahlen als auch zur Stabilisierung des erreichten Feinverteilungszustandes sind Hilfsmittel erforderlich, die zusammen mit den Farbstoffen sogenannte Farbstoffzubereitungen bilden. Die Herstellung der Farbstoffzubereitungen erfolgt in der Regel durch Naßmahlung, d. h. daß die Farbstoffe mit den Hilfsmitteln in Gegenwart eines Lösungsmittels, vorzugsweise in Gegenwart von Wasser, gemahlen werden. Die so erhaltenen Produkte können zu redispergierbaren pulverförmigen Zubereitungen getrocknet werden, die den Vorteil haben, daß auch über längere Lagerzeiten die Farbstoffeinverteilung nicht beeinträchtigt wird. Der Nachteil derartiger pulverförmiger Zubereitungen besteht offensichtlich darin, daß zunächst unter Aufwendung erheblicher Energien die bei der Mahlung anwesende Flüssigkeit durch Verdampfen entfernt werden muß und vor der Verwendung das Pulver zunächst in Rühraggregaten wieder in eine flüssige oder zumindest pastenförmige Form überführt werden muß. Der kostspielige und aufwendige Umweg über pulverförmige Farbstoffzubereitungen kann dann vermieden werden, wenn es gelingt, flüssige Farbstoffzubereitungen herzustellen, die insbesondere im Hinblick auf die Lagerstabilität, d. h. auf die Beständigkeit der Feinverteilung des Farbstoffs gegenüber den Pulvermarken keine Nachteile aufweisen.

Technisch vorteilhafte Farbstoffzubereitungen sollen die folgenden Eigenschaften aufweisen: Sie sollen auf üblichen Mahlaggregaten auf einfache Weise herstellbar sein, d. h. die Mahldauer bis zur Erreichung des gewünschten Feinverteilungsgrades möglichst gering sein soll und daß keine Behinderungen des Mahlvorganges wie z. B. ein Schäumen der Zubereitung eintreten. Die erhaltenen flüssigen Zubereitungen sollen eine möglichst gute Lagerstabilität haben, d. h. sie sollen mindestens 6 Monate lang ohne merkliche Vergröberung des Farbstoffkorns und ohne sonstige nachteilige Veränderungen haltbar sein, sie sollen sich gut handhaben lassen, d. h. daß ihre Viskosität nicht zu hoch sein darf und insbesondere daß keine Thixotropie-Effekte auftreten, und sie sollen einwandfreie anwendungstechnische Eigenschaften haben, wobei insbesondere die sehr wichtige HT-Flottenbeständigkeit und Schaumfreiheit während des Färbeprozesses eine überragende Rolle spielen. Ein großer Teil der hydrophobes synthetisches Fasermaterial enthaltenden oder daraus bestehenden Textilmaterialien enthaltenden oder daraus bestehenden Textilmaterialien wird nämlich nach dem sogenannten HT-Verfahren gefärbt, wobei man das Textilmaterial mit einer Farbflotte, die im tungen mit Wasser erhalten wird, in einem druckfesten Färbeaggregat bei Temperaturen zwischen 115 und 140° C, vorzugsweise bei ca. 130° C behandelt. Hierbei diffundiert der Dispersionsfarbstoff allmählich in die hydrophobe Faser ein, er hat jedoch eine mittlere Verweildauer in der heißen Färbeflotte. Es wird nun gefordert, daß das Korn des Dispersionsfarbstoffs sich während dieser Verweildauer unter den Färbebedingungen nicht wesentlich vergrößert. Tritt eine Vergröberung

des Korns ein, ist somit die HT-Stabilität des Farbstoffs in der eingesetzten Farbstoffzubereitung zu gering, so treten fleckige Abscheidungen des Farbstoffs auf dem Textilmaterial auf, und die Färbungen sind in der Regel unbrauchbar. Es hat sich in der Praxis als sehr schwierig erwiesen, Farbstoffzubereitungen herzustellen, die alle die oben genannten Forderungen gleichermaßen gut erfüllen. Zur Herstellung optimaler Farbstoffzubereitungen sind daher seit langem viele Ansätze gemacht worden. So ist es seit langem bekannt, Dispersionsfarbstoffe in Gegenwart anionischer Dispergiermittel, wie Ligninsulfonate mit unterschiedlichem Sulfonierungsgrad, Sulfonsäurederivaten von Kondensationsprodukten aus Phenolen oder Naphtolen und Formaldehyd, Kondensationsprodukten aromatischer Sulfonsäure mit Formaldehyd, Natrium-p-Xylolsulfonat, Natrium-Dibenzylsulfanylat, langkettiger Alkylsulfate oder Alkylsulfonate, in geeigneten Mühlen vorzugsweise Kugel-, Perl- oder Sandmühlen oder in Homogenisatoren oder Ultraschallgeräten in die gewünschte Feinverteilung zu überführen. Die so erhaltenen Zubereitungen zeigen jedoch häufig eine zu geringe Lagerstabilität und haben ein ungünstiges rheologisches Verhalten..Weiterhin tritt oft während des Mahlens starkes Schäumen ein und auch die HT-Stabilität der unter Verwendung dieser Zubereitungen erhaltenen Färbeflotten läßt häufig zu wünschen übrig. In den letzten Jahren ist man daher dazu übergegangen, die oben genannten anionischen Hilfsmittel weitgehend durch nichtionische Produkte zu ersetzen. So ist es aus der DOS 2 628 445 bekannt, die Mahlung der Farbstoffe in Gegenwart nichtionischer Dispergier- und Verdickungsmittel, wie beispielsweise Additionsprodukten von Ethylenoxid an 4-Nonylphenol,Oleylalkohol ,Kokosfettalkohol, Ölsäure, Kokosfettsäure, Abietinsäure usw. durchzuführen. Diese Produkte zeigen jedoch in vielen Fällen eine schlechte Verträglichkeit mit sonstigen, während des Mahlvorgangs bereits anwesenden Bestandteilen der Farbstoffzubereitung, wie beispielsweise synthetischen Verdickungsmitteln auf der Basis von Polyacrylsäure, Polyacrylamid oder auch natürlichen Verdickungsmitteln wie z. B. Johannisbrotkernmehl, Kernmehläthern, Methylzellulose oder

Carboxymethylzellulose. Solche Unverträglichkeiten können sich beispielsweise in einer mehr oder minder großen Thixotropie der hergestellten Zubereitungen manifestieren.

Auch aus der DOS 2 732 732 ist die Herstellung von Farbstoffzubereitungen durch Mahlen der Farbstoffe in Gegenwart von nichtionogenen Umsetzungsprodukten von Äthylenoxyd mit Phenolen, Naphtolen, Hydroxydiphenyl und den Additionsprodukten von Styrol an Phenole, Naphtole und Hydroxydiphenyl bekannt. Die danach erhaltenen Zubereitungen zeigen jedoch im wesentlichen die gleichen Nachteile, die andere mit den weiter oben genannten nichtionogenen Hilfsmitteln hergestellte Zubereitungen aufweisen. Insbesondere führt der Einsatz von Äthylenoxidaddukten an Umsetzungsprodukte von Styrol mit Hydroxyaromaten, wie z. B. Hydroxydiphenyl, zu schwankenden Ergebnissen im Hinblick auf die Dauer der erforderlichen Mahlung, die Lagerstabilität und insbesondere auf das Färbeverhalten der hergestellten Zubereitungen. Es ist auch bereits bekannt (vergl. z.B. die DE-OS 27 57 330 der Kao Soap Co. Ltd. und US-Patent 3 960 486, E. Daubach et al.) die Mahlung in Anwesenheit von Kombinationen aus nichtionogenen und ionogenen Hilfsmitteln der oben angegebenen Klassen vorzunehmen. Jedoch haben auch diese Kombinationen wesentliche Nachteile insbesondere bei der Herstellung der Farbstoffzubereitungen. Sie zeigen nämlich während des Mahlvorganges ein sehr starkes Schäumen, was zu einem wesentlich geringeren Aufmahlgrad führt und darüberhinaus haben auch diese Farbstoffpräparationen ein ungünstiges rheologisches Verhalten. Um das Schäumen während des Mahlvorganges auf ein Mindestmaß zu beschränken, ist es auch bekannt geworden, gleichzeitig mit diesen Kombinationen nichtionogener und anionischer Hilfsmittel Entschäumungsmittel zuzusetzen. Hierbei wurden als Entschäumungsmittel Siliconöle oder Derivate von Phosphorsäureestern eingesetzt. Diese Entschäumerzusätze bringen zwar Abhilfe bei der Herstellung der Farbstoffzubereitungen, jedoch entstehen bei der praktischen Anwendung solcher Zubereitungen vor allem beim Zusatz von Färbereihilfsmitteln oder Druckereihilfsmitteln große Probleme, die häufig zu Fleckenbildung auf dem zu färbenden Textilmaterial führen.

Es wurde nun gefunden, daß es möglich ist, Farbstoffzubereitungen von in Wasser schwer löslichen oder unlöslichen Farbstoffen herzustellen, die die oben geschilderten Nachteile in erheblich geringerem Maße aufweisen und die eine Kombination der zu fordernden technischen Eigenschaften aufweisen, die bisher in keiner bekannten Farbstoffzubereitung in so vorteilhaftem Ausmaß vorgelegen hat. Die erfindungsgemäßen Zubereitungen sind somit bekannten vergleichbaren Zubereitungen im Hinblick auf die Kombination technisch wertvoller Eigenschaften wie auch im Hinblick auf einzelne besonders wertvolle Eigenschaften erheblich überlegen.

Die erfindungsgemäßen stabilen Farbstoffzubereitungen von feinverteilten in Wasser schwerlöslichen oder unlöslichen Farbstoffen, Wasser, einem oder mehreren bekannten und üblichen Zusatzstoffen, wie Dispergier-, Netz- und Konservierungsmitteln, haben einen Gehalt von 5 bis 75 Gew.%, bezogen auf das Gewicht des in der Zubereitung enthaltenen Farbstoffs, eines Hilfsmittels der allgemeinen Formel I

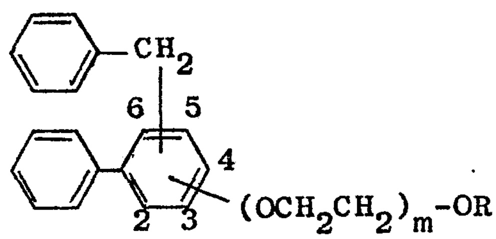

(I)

worin der Substituent $-(OCH_2CH_2)_m-OR$ in 2 oder 4-Stellung des Diphenyls steht, m eine Zahl von 7 bis 20, vorzugsweise 8 bis 14 und R Wasserstoff oder ein Rest der Formel II

$$-C_nH_{2n}-COO^{\ominus}X^{\oplus} \qquad (II)$$

bedeutet, wobei n eine Zahl von 1 bis 4, vorzugsweise 1 oder 2 ist und X für Wasserstoff, ein Alkalimetallkation, $NH_4^{\oplus}$, ein Mono- , Di- oder Trialkyl- oder Hydroxyalkylammoniumkation mit 1 bis 4 C-Atomen in den Alkylgruppen steht.

Besonders vorteilhalt ist es, Hilfsmittelgemische der Formel I einzusetzen, die die Isomeren, bei denen $-(OCH_2CH_2)_m-OR$ in 2- bzw. in 4-Stellung des Diphenyls stehen, im gleichen Verhältnis enthalten, wie das 2- bzw. 4-Hydroxydiphenyl in Rohprodukten der technischen Hydroxydiphenyl-Herstellung vorliegt.

In dem zweiwertigen Kohlenwasserstoffrest $-C_nH_{2n}-$ können die beiden Bindungen in 1,2- bis 1,n-Stellung stehen, und die Kette kann linear oder verzweigt sein.

Beispiele für Reste der Formel $-C_nH_{2n}-$ sind Methylen, Ethylen, Ethyliden, Dimethyl-methylen, 2-Methyl-ethylen, 2-Ethyl-ethylen, Trimethylen, 1-, 2- oder 3-Methyl-trimethylen.

Bevorzugt sind lineare Kohlenwasserstoffreste.

Vorzugsweise enthalten die Farbstoffzubereitungen das Hilfsmittel in einer Menge von 15 bis 45 %, bezogen auf den Farbstoffanteil.

Die erfindungsgemäßen Farbstoffzubereitungen können ein Hilfsmittel der Formel I enthalten, in dem R ausschließlich Wasserstoff ist, oder aber ein Hilfsmittel der Formel I, in dem R ausschließlich ein Rest der Formel II ist. Bevorzugt sind jedoch erfindungsgemäße Farbstoffzubereitungen, die ein Hilfsmittel der allgemeinen Formel I enthalten, in dem R im statistischen Mittel zu 60 bis 95 %, vorzugsweise zu 80 bis 95 % Wasserstoff und zu 40 bis 5 %, vorzugsweise 20 bis 5 % ein Rest der Formel II ist. Solche Hilfsmittel stellen Mischungen dar aus 60 bis 95 Mol%, vorzugsweise 80 bis 95 Mol% der Verbindung der Formel I, in der R Wasserstoff ist und 40 bis 5 Mol%, vorzugsweise 20 bis 5 Mol% einer Verbindung der Formel I, in der R ein Rest der Formel II ist.

Der Einsatz des Hilfsmittels der Formel I bei der Herstellung der erfindungsgemäßen Farbstoffzubereitungen gestattet es, ungewöhnlich hohe Farbstoffgehalte in die Zubereitungen einzuarbeiten. So ist es möglich, bei kurzer Mahldauer lagerstabile und färbestabile Farbstoffteige mit bis zu 50 % Farbstoffanteil herzustellen. Nicht immer sind jedoch so hohe Farbstoffgehalte in den Zubereitungen erwünscht, so daß die erfindungsgemäßen Farbstoffzubereitungen in der Regel 15 bis 50 %, vorzugsweise 20 bis 40 Gew.% Dispersionsfarbstoff enthalten.

Die erfindungsgemäßen Farbstoffzubereitungen können in der üblichen Weise zum Färben und Bedrucken von Textilmaterialien eingesetzt werden. Hierzu werden sie in bekannter Weise zu Färbeflotten verdünnt, denen gewünschtenfalls noch weitere übliche Färbehilfsmittel, wie beispielsweise Carrier, Egalisiermittel, Klotz- und Netzmittel zugesetzt werden können. Bei der Herstellung von Druckpasten werden die erfindungsgemäßen Farbstoffzubereitungen in üblicher Weise mit Stammverdickungen, Farbstoffixierbeschleunigern evtl. hydrotropen Mitteln, schwachen Oxidationsmitteln, Fungiziden und pH-Regulatoren homogenisiert. Bei der Verwendung der erfindungsgemäßen Farbstoffzubereitungen beim Färben zeichnen sich die Färbeflotten durch eine deutlich verbesserte HT-Stabilität aus, beim Carrierfärben durch eine sehr gute Verträglichkeit mit den eingesetzten Carriern. Die gute Verträglichkeit der Hilfsmittel der Formel I mit sonstigen für textile Färbe- und Druckverfahren eingesetzte Hilfsmittel gestattet es auch, solche bei Färbe- und Druckoperationen üblichen Zusätze, wie beispielsweise Netzmittel, Oxidationsmittel, Fungizide, Klotzhilfsmittel auf Basis von Polyacrylsäure und Polyacrylamid, synthetische oder natürliche Verdicker usw. von vornherein in die erfindungsgemäßen Zubereitungen einzuarbeiten. Dies stellt einen weiteren, sehr wertvollen anwendungstechnischen Vorteil dar, insbesondere dann, wenn in Continue-Färbeanlagen eine automatische Zudosierung des Färbemittels erfolgen soll. Beim Einsatz der erfindungsgemäßen Farbstoffzubereitungen in Rezepturen für das Bedrucken von Textilmaterialien bleibt die Viskosität der Druckpasten über mehrere Tage stabil, die Konturen und die Schärfe der Muster der hergestellten Drucke sind ausgezeichnet, der Weißfond der Ware wird nicht angeschmutzt und die Reibechtheiten der hergestellten Drucke sind hervorragend.

Die Herstellung der erfindungsgemäßen Druckpasten erfolgt durch Mahlen des oder der Dispersionsfarbstoffe, des erfindungsgemäß einzusetztenden Hilfsmittels und Wasser sowie gegebenenfalls weiterer gewünschter bekannter Färbereihilfsmittel, wobei für je 100 Teile herzustellender erfindungsgemäßer Farbstoffzubereitung bis 50 Teile, in der Regel 15 bis 50 Teile, vorzugsweise 20 bis 40 Teile Dispersionsfarbstoff und, bezogen auf die Menge des eingesetzten Dispersionsfarbstoffs 5 bis 75 Gew.%, vorzugsweise 15 bis 45 Gew.% des Hilfsmittels der Formel I eingesetzt werden. Normalerweise werden die zur Herstellung der erfindungsgemäßen Druckpasten eingesetzten Stoffe zunächst in einem Mischaggregat, beispielsweise in einem Rührkessel, einem Mixgerät oder unter Zuhilfsnahme eines Schnellrührers zu einer gleichmäßigen Masse verarbeitet. Anschließend an diesen ersten Mischvorgang wird die erhaltene Masse dann der eigentlichen Mahlung unterworfen, wobei alle üblichen Mahlaggregate insbesondere Kugel- oder Perlmühlen und mit besonderem Vorteil Sandmühlen verwendet werden können. Selbst bei sehr hohen Farbstoffanteilen bleibt die zur Feinverteilung des Farbstoffs auf Korngrößen unter 1 $\mu$ erforderliche Mahlzeit kurz. Sie beträgt in der Regel 2 bis 3 Stunden. Von besonderem Vorteil ist es dabei, daß während des Mahlvorgangs kein Schäumen auftritt und die Mahlaggregate daher ihre volle Leistung entfalten können.

Verbindungen der Formel I, in denen R Wasserstoff ist, sind seit geraumer Zeit bekannt und werden als Egalisiermittel beim Färben von Polyestertextilien nach dem HT-Verfahren eingesetzt. (vgl. hierzu: Lindner, Tenside-Textilhilfsmittel-Waschrohstoffe (1971) Bd III, Seite 2792; US-Patentschrift 3,236,583 und französische Patentschrift 1,346,022). Die Herstellung dieser Verbindungen erfolgt aus dem z. B. analog den Angaben von A. Factor et al., Journal of Organic Chemistry, (1970) Bd 35/1, Seite 57 - 62, Buu-Hof, Demerseman, Journal of Organic Chemistry (1955) Bd 20/2, Seite 1129 - 1134 oder Samin, Putsillo, Trudy Inst. Nefti Akad. Nauk SSSR, Bd 6 (1955), Seite 116 - 127 durch Benzylierung von 2- bzw. 4-Hydroxydiphenyl mit Benzylchlorid synthetisierten Benzyl-biphenylol durch Umsetzung mit 7 bis 20 Mol Ethylenoxid gemäß den Angaben der DE-PS 767 842.

Besonders zweckmäßig ist es, anstelle des reinen 2-Hydroxydiphenyls bzw. 4-Hydroxydiphenyls technische Gemische der beiden Verbindungen, wie sie bei deren Herstellung als Rohprodukt anfallen, einzusetzen. Man spart damit die Trennung der beiden Isomeren und erhält genau so wertvolle Produkte wie beim Einsatz der Reinsubstanzen.

In Hinblick auf die aus den oben genannten Druckschriften bekannten Tatsache, daß Produkte der Formel I in denen R Wasserstoff ist, als Egalisiermittel eingesetzt werden können, erscheint es überraschend, daß sich derartige Verbindungen, insbesondere wenn sie im oben angegebenen Verhältnis mit solchen der Formel I, in der R ein Rest der Formel II ist, kombiniert werden zum leichten Aufmahlen von Dispersionsfarbstoffen und Herstellung stabiler Farbstoffdispersionen eignen. Die Anforderungen, die bei der bekannten Verwendung einerseits und der erfindungsgemäßen andererseits gestellt werden, sind im Grunde gegenläufig. Während das Egalisiermittel helfen soll ein durch kinetische Einflüsse entstandenes thermodynamisches Ungleichgewicht, nämlich örtliche Unterschiede der Farbstoffkonzentration im Textilmaterial, auszugleichen und damit den thermodynamisch energieärmsten Zustand herbeizuführen, besteht seine erfindungsgemäße Aufgabe darin, die Herbeiführung eines thermodynamisch sehr energiereichen Zustands, nämlich die extreme Feinverteilung von Farbstoffen zu fördern und diesen Zustand auch noch über längere Zeit und unter hochdispersen Phasen abträglichen Bedingungen, z. B. bei erhöhter Temperatur, zu stabilisieren. Verbindungen der Formel I, in denen R ein Rest der Formel II ist, sind neu. Auch erfindungsgemäße Hilfsmittel, bestehend aus einer Mischung von Verbindungen der Formel I, in denen R Wasserstoff ist, mit Verbindungen der Formel I, in denen R ein Rest der Formel II ist, sind ebenfalls neu.

Die Verbindungen der Formel I, in denen R ein Rest der Formel II ist, können in an sich bekannter Weise durch Umsetzung von Verbindungen der Formel I, in denen R Wasserstoff ist, mit Halogen-alkancarbonsäuren bzw. deren Salzen der Formel III

$$Hal\text{-}C_nH_{2n}\text{-}COO^{\ominus}\,X^{\oplus} \qquad (III)$$

worin Hal ein Halogenatom, vorzugsweise Chlor oder Brom bedeutet, hergestellt werden. Die Umsetzung wird in Gegenwart von 2 Mol Alkali pro Mol Halogen-carbonsäure bei Temperaturen zwischen 20 und 100°C, vorzugsweise 20 bis 40°C, durchgeführt. Als Alkali kommen in Betracht Alkalihydroxide und Alkalisalze schwacher Säuren, vorzugsweise Carbonate, aber auch Ammoniak, Mono-, Di- oder Trialkylamine oder Hydroxyalkylamine mit 1 bis 4 C-Atomen in den Alkylgruppen.

Halogencarbonsäuren, die zur Herstellung der erfindungsgemäßen neuen Hilfsmittel geeignet sind, sind z.B. Monochloressigsäure, Monobromessigsäure, α-Chlor- oder α-Brompropionsäure, β-Chlor- oder β-Brompropionsäure, α-, β- oder γ-Chlor- oder Brombuttersäure, α-Chlor- oder Bromisobuttersäure oder α-, β-, γ- oder δ-Chlor- oder Bromvaleriansäure.

Die Reaktion kann ohne Verwendung eines Lösungsmittels oder in einem organischen Lösungsmittel oder in Wasser ausgeführt werden. Organische Lösungsmittel, die für diesen Zweck geeignet sind, sind beispielsweise Dioxan, Polyethylenglykoldialkyläther mit niederen Alkylresten von 1 bis 4 Kohlenstoffatomen, Dimethoxyäthan, Diäthoxyäthan, Dimethyl- oder Diäthyläther des Di- oder Triäthylenglykols, Tetrahydrofuran oder Sulfolan. Es ist auch möglich, in Mischungen dieser organischen Lösungsmittel mit Wasser zu arbeiten. Will man nach diesem Verfahren reine Verbindungen der Formel I, in denen R ein Rest der Formel II ist, herstellen, so verwendet man zweckmäßigerweise einen gewissen Überschuß der Halogencarbonsäure. Üblich ist es, pro Mol Verbindung der Formel I, in der R Wasserstoff ist, ein bis zwei Mol, vorzugsweise 1,3 bis 2 Mol der Halogencarbonsäure einzusetzen.

Die so hergestellten rohen Reaktionsmischungen können in an sich bekannter Weise auf die Salze oder die freien Karbonsäuren der Formel I, worin R ein Rest der Formel II ist, aufgearbeitet werden. Will man be-

vorzugte erfindungsgemäß einzusetzende Hilfsmittel, d.h. solche die zu 60 bis 95 Mol % aus Verbindungen der Formel I, in denen R Wasserstoff ist und 40 bis 5 Mol % von Verbindungen der Formel I, in denen R ein Rest der Formel II ist, bestehen, herstellen, so kann man 1 Mol-Teil einer Verbindung der Formel I, worin R ein Rest der Formel II ist, gegebenenfalls mit bis zu 20 Mol-Teilen einer Verbindung der Formel I, worin R Wasserstoff ist, und Wasser und/oder einem mit Wasser mischbaren organischen Lösungsmittel, vorzugsweise einem niederen Alkanol homogenisieren. Es ist jedoch vorteilhafter, solche bevorzugten erfindungsgemäßen Hilfsmittel direkt durch Umsetzung von Verbindungen der Formel I, in denen R Wasserstoff ist, mit einem stöchiometrischen Unterschuß der Halogen-carbonsäure herzustellen. Man verwendet hierbei pro Mol der Verbindung der Formel I, in der R Wasserstoff ist, 0,4 bis 0,05 Mol, vorzugsweise 0,2 bis 0,05 Mol der Halogen-carbonsäure.

Solche bevorzugten, erfindungsgemäß einzusetzenden Hilfsmittel zeigen besondere Vorteile bei der Herstellung der erfindungsgemäßen Farbstoffzubereitungen. Ihr Einsatz führt zu einer Beschleunigung des Mahlprozesses, d.h. daß die Mahldauer erheblich zurückgeht, und sie ermöglichen die Herstellung besonders farbstoffreicher Zubereitungen in der gleichen kurzen Mahldauer, die normalerweise zur Herstellung von Zubereitungen mit niedrigerem Farbstoffanteil erforderlich ist, und das lästige Schäumen der Zubereitungen wird vermieden.

Die folgenden Ausführungsbeispiele veranschaulichen die Herstellung und den Einsatz der erfindungsgemäßen Farbstoffzubereitungen und die Herstellung der neuen erfindungsgemäß einzusetzenden Hilfsmittel. Teile sind Gewichtsteile und %-Angaben Gewichtsprozente.

<u>Beispiel 1</u>

190 Teile einer wäßrigen Paste von C.I. Disperse Blue 165, entsprechend 168 g Reinfarbstoff, 40 Teile Äthylenglykol, 25 Teile des Umsetzungsproduktes aus x-Benzyl-2- bzw. 4-hydroxydiphenyl mit 12 Molen Ethylenoxyd, 3 Teile des Umsetzungsproduktes aus x-Benzyl-2- bzw. 4-hydroxydiphenyl mit 12 Molen Äthylenoxyd und Monochloressigsäure, 1,5 Teile Preventol und 140,5 Teile Wasser wurden mit einer "Braun Multimix" angeschlagen und anschließend in eine Sandmühle überführt. Dazu wurden 500 ml "Ottawa Sand" mit einer durchschnittlichen Körnung von 0,7 - 1 mm eingefüllt und anschließend mit einem Rührer bei 2200 U/min so lange gemahlen, bis eine auf 1 % Reinfarbstoff-Gehalt verdünnte Probe keinen Rand auf einem Weißbandfilter (11 cm Ø) mehr erkennen läßt. Dann wird vom Mahlsand abfiltriert und anschließend über ein 90 oder 120 DIN Sieb gesiebt.

Mahlzeit für die Herstellung der Feinverteilung $< 1\ \mu$ : 3 Std.

Die hergestellte Farbstoffpräparation ist für textile Färbungen nach den üblichen Verfahren und für Textildruck hervorragend geeignet und mindestens 6 Monate ohne nachteilige anwendungstechnische Veränderungen haltbar.

Beispiel 2

Aus 282 Teilen einer wäßrigen Paste von C.I. Disperse Yellow 114, entsprechend 142 g Reinfarbstoff, 25 Teilen Umsetzungsprodukt x-Benzyl-2-bzw. 4-hydroxydiphenyl mit 16 Molen Äthylenoxyd, 3 Teilen des Umsetzungsproduktes aus x-Benzyl-2-bzw. 4-hydroxydiphenyl mit 16 Molen Äthylenoxyd und Monochloressigsäure, 40 Teilen Äthylenglykol, 1,5 Teilen Preventol und 48,5 ml Wasser wird ein Teig angeschlagen und wie im Beispiel 1 angegeben gemahlen.

Mahlzeit für die Herstellung der Verteilung $< 1\ \mu$ : 2 Stdn.

Die erhaltene Farbstoffzubereitung ist für alle textilen Färbe- und Druckverfahren sehr gut geeignet und mindestens 6 Monate haltbar.

Beispiel 3

Aus 321 Teilen einer wäßrigen Paste von C.I. Disperse Orange 71, entsprechend 160 g Reinfarbstoff, 53 Teilen Glykol, 33,3 Teilen des Umsetzungsproduktes aus x-Benzyl-2- bzw. 4-hydroxydiphenyl mit 12 Molen Äthylenoxyd, 4 Teilen des Umsetzungsproduktes aus x-Benzyl-2- bzw. 4-hydroxydiphenyl mit 12 Molen Äthylenoxyd und Monochloressigsäure, 1,5 Teilen Preventol und 120 ml $H_2O$ wird eine Farbstoffpaste angeschlagen und wie in Beispiel 1 beschrieben vermahlen.
Mahlzeit für die Herstellung der Feinverteilung $< 1\ \mu$ : 2 Stdn
Die so erhaltene Farbstoffzubereitung ist für alle gängigen textilen Färbe- und Druckverfahren hervorragend geeignet und mindestens 6 Monate haltbar.

Der in obigen Beispielen angegebene Glycolzusatz dient als Frostschutz und kann bei Frostfreiheit auch entfallen. Preventol schützt die Farbstoffzubereitungen vor Pilz- und Bakterienbefall.

In analoger Weise wie in den Beispielen 1 bis 3 beschrieben lassen sich auch die Farbstoffzubereitungen der folgenden Tabelle herstellen, die alle eineFeinverteilung von $< 1\ \mu$ aufweisen und mindestens 6 Monate ohne anwendungstechnische Nachteile haltbar sind.

Darin bedeutet:

Dispergiermittel A : Erfindungsgemäß einzusetzende Verbindung der Formel I in der R = H ist

Dispergiermittel B : Erfindungsgemäß einzusetzende Verbindung der Formel I in der

$$R = -C_nH_{2n}-COO^{\ominus}\ X^{\oplus} \qquad \text{ist.}$$

| Beisp.-Nr. | Dispersionsfarbstoff | Mahlzeit [Std.] | Mahlverhalten | Feinverteilung | Dispergiermittel | | | | Farbstoffkonzentration |
|---|---|---|---|---|---|---|---|---|---|
| | | | | | A : B | m | n | $X^{\oplus}$ | |
| 4 | C.I. Disperse Red 184 | 2 | kein Schaum | < 1 μ | 6:4 | 14 | 3 | $K^{\oplus}$ | 42 % |
| 5 | C.I. Disperse Violet 48 | 4 | kein Schaum | < 1 μ | 9:1 | 10 | 4 | $(C_4H_9)_3\overset{\oplus}{N}H$ | 35,5 % |
| 6 | C.I. Disperse Blue 165 | 2 | kein Schaum | < 1 μ | 8,5:1,5 | 8 | 2 | $\overset{\oplus}{N}(CH_2-(H_2OH)_3$ | 24 % |
| 7 | C.I. Disperse Red 184 | 2 | kein Schaum | < 1 μ | 7:3 | 12 | 1 | $Na^{\oplus}$ | 40 % |
| 8 | C.I. Disperse Red 183 | 2 | kein Schaum | < 1 μ | 9:1 | 18 | 2 | $(CH_3)_3\overset{\oplus}{N}H$ | 35,5 % |
| 9 | C.I. Disperse Blue 165 | 2 | kein Schaum | < 1 μ | 8:2 | 10 | 1 | $K^{\oplus}$ | 32 % |
| 10 | C.I. Disperse Red 184 | 2 | kein Schaum | < 1 μ | 1:0 | 12 | - | - | 17,5 % |

| Beisp.-Nr. | Dispersionsfarbstoff | Mahlzeit [Std.] | Mahlverhalten | Feinverteilung | Dispergiermittel | | | | Farbstoffkonzentration |
|---|---|---|---|---|---|---|---|---|---|
| | | | | | A : B | m | n | $X^{\oplus}$ | |
| 11 | C.I. Disperse Blue 165 | 3 | kein Schaum | < 1 µ | 8,33:1 | 12 | 1 | $H^{\oplus}$ | 42 % |
| 12 | C.I. Disperse Yellow 114 | 2 | kein Schaum | < 1 µ | 8,33:1 | 12 | 1 | $H^{\oplus}$ | 35,5 % |
| 13 | C.I. Disperse Violet 48 | 4 | kein Schaum | < 1 µ | 8,33:1 | 12 | 1 | $H^{\oplus}$ | 45 % |
| 14 | C.I. Disperse Yellow 114 | 2 | kein Schaum | < 1 µ | 8 : 2 | 14 | 1 | $Na^{\oplus}$ | |
| 15 | C.I.Disperse Yellow 114 | 1 | kein Schaum | < 1 µ | 9,33:1 | 12 | 1 | $Na^{\oplus}$ | 35,5 % |
| 16 | C.I. Disperse Violet 48 | 2 | kein Schaum | < 1 µ | 1 : 0 | 12 | - | - | 45 % |
| 17 | C.I. Disperse Violet 48 | 2 | kein Schaum | < 1 µ | 3 : 7 | 7 | 1 | $Na^{\oplus}$ | 45 % |

| Beisp.-Nr. | Dispersions-farbstoff | Mahl-zeit [Std.] | Mahl-verhalten | Fein-vertei-lung | Dispergiermittel | | | | Farbstoff-konzen-tration |
|---|---|---|---|---|---|---|---|---|---|
| | | | | | A : B | m | n | $X^{\oplus}$ | |
| 18 | ®Samaron Gelb H4GS | 2 | kein Schaum | < 1 µ | 1 : 9 | 20 | 1 | $H^{\oplus}$ | 35,5 % |
| 19 | C.I. Disperse Blue 165 | 3 | kein Schaum | < 1 µ | 4 : 6 | 14 | 1 | $H^{\oplus}$ | 42 % |
| 20 | ®Samaron Gelb H4GS | 4 | kein Schaum | < 1 µ | 0 : 1 | 12 | 1 | $Na^{\oplus}$ | 35,5 % |
| 21 | C.I.Disperse Red 184 | 2 | kein Schaum | < 1 u | A + Tamol NNO 7 : 2 | 12 | - | - | 42 % |

Versucht man die analoge Herstellung der Zubereitung des Tabellenbeispiels 4 unter Ersatz des dort verwendeten erfindungsgemäßen Hilfsmittels durch ein aus der DOS 2628445 bekanntes Hilfsmittel auf der Basis von Oxäthylierten Alkylphenolen, so tritt beim Mahlen starkes Schäumen auf und eine nur 17 % Farbstoff enthaltende Zubereitung weist noch nach 8 Stunden Mahldauer nicht die gewünschte Feinverteilung von < 1 µ auf.

Beispiel 22

In einem 250 ml Kolben mit Thermometer, Tropftrichter und Rückflußkühler werden 82,46 g des Umsetzungsprodukts aus x-Benzyl-4-hydroxy bzw. 2-hydroxydiphenyl mit 12 Mol Äthylenoxid vorgelegt, mit Stickstoff überlagert und auf eine Innentemperatur von 40 - 45°C geheizt. In 1 1/2 Stunden werden dann 8,85 g NaOH-Pulver langsam eingetragen. Die entstandene Lösung wird sirupös und färbt sich dunkelbraun. Danach wird 15 Minuten bei 40 - 45°C nachgerührt, anschließend bei dieser Temperatur 10,45 g Monochloressigsäure eingetragen und 2 Stunden bei dieser Temperatur nachgerührt.

Ausbeute: 100 g Rohprodukt; der Verätherungsgrad, bestimmt durch acidimetrische Titration, beträgt 65,1 %.

Beispiel 23

In einem 250 ml Kolben mit Thermomether, Tropftrichter und Rückflußkühler werden 123,69 g des Umsetzungsprodukts aus x-Benzyl-4-hydroxy-bzw. 2-hydroxydiphenyl mit 12 Molen Äthylenoxyd mit Stickstoff überlagert und auf eine Innentemperatur von 40 - 45° C geheizt. Dann werden in einer Stunde 132,75 g NaOH-Pulver langsam eingetragen, wobei sich die entstehende Lösung bräunlich färbt. Anschließend wird 15 Minuten nachgerührt bei 40 - 45°C, 20,20 g β-Chlorbuttersäure eingetragen und 2 Stunden bei dieser Temperatur nachgerührt.

Ausbeute: 150 g Rohprodukt; der Verätherungsgrad, bestimmt durch acidimetrische Titration, beträgt 68 %.

Beispiel 24

100 g des Umsetzungsprodukts aus x-Benzyl-4-hydroxydiphenyl mit 12 Molen Äthylenoxyd werden mit Stickstoff überlagert und langsam bei einer Innentemperatur von 40 - 45°C mit 1,495 g NaOH-Pulver versetzt und 15 Minuten bei 40 - 45° nachgerührt. Anschließend werden 1,606 g Monochloressigsäure bei derselben Temperatur eingetragen und 1 Stunde nachgerührt.

Ausbeute: 100 g Rohprodukt, welches das Umsetzungsprodukt von x-Benzyl-4-hydroxydiphenyl und 12 Molen Äthylenoxyd und dessen Verätherungsprodukt mit Monochloressigsäure, vorliegend als Na-Salz, im Gewichtsverhältnis 9 : 1 enthält. Die Bestimmung wurde durch acidimetrische Bestimmung der Carboxylgruppe durchgeführt.

Ersetzt man in den Ausführungsbeispielen 1 und 20 die dort eingesetzten 25 Teile des Umsetzungsprodukts aus x-Benzyl-2-bzw. 4-hydroxydiphenyl mit 12 Molen Ethylenoxid und 3 Teile des Umsetzungsprodukts aus x-Benzyl-2-bzw. 4-hydroxydiphenyl mit 12 Molen Ethylenoxid und Monochloressigsäure durch 28 Teile des im Beispiel 24 erhaltenen Rohprodukts, so erhält man praktisch gleich gute Farbstoffzubereitungen.

Die in den Tabellenbeispielen 17 und 19 eingesetzten Dispergiermittel können ohne Nachteile durch die gleichen Mengen der nach den Beispielen 22 und 23 hergestellten Rohprodukte ersetzen.

## Patentansprüche

1. Stabile Farbstoffzubereitungen von feinverteilten in Wasser schwerlöslichen oder unlöslichen Farbstoffen, Wasser einem oder mehreren bekannten und üblichen Zusatzstoffen wie Diespergier-, Netz- und Konservierungsmitteln, gekennzeichnet durch einen Gehalt von 5 bis 75 Gew.%, bezogen auf das Gewicht des in der Zubereitung enthaltenen Farbstoffs, eines Hilfsmittels der allgemeinen Formel I

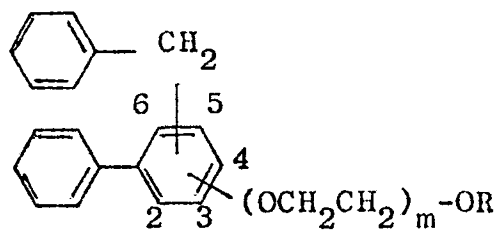

(I)

worin der Substituent $-(OCH_2CH_2)_m-OR$ in 2 oder 4-Stellung des Diphenyls steht, m eine Zahl von 7 bis 20 und R Wasserstoff oder ein Rest der Formel II

$$-C_nH_{2n}-COO^{\ominus} X^{\oplus} \qquad (II)$$

bedeutet, wobei n eine Zahl von 1 bis 4 ist und X für Wasserstoff, ein Alkalimetallkation, $NH_4^{\oplus}$, ein Mono-, Di- oder Trialkyl- oder hydroxyalkylammoniumkation mit 1 bis 4 C-Atomen in den Alkylgruppen steht.

2. Farbstoffzubereitung gemäß Anspruch 1, dadurch gekennzeichnet, daß in dem Hilfsmittel der allgemeinen Formel I R zu 60 bis 95 % Wasserstoff und zu 40 bis 5 % ein Rest der Formel II ist.

3. Farbstoffzubereitungen gemäß Anspruch 1, dadurch gekennzeichnet, daß in dem Hilfsmittel der allgemeinen Formel I R zu 80 bis 95 % Wasserstoff und zu 20 bis 5 % ein Rest der Formel II ist.

4. Farbstoffzubereitung gemäß Anspruch 1, dadurch gekennzeichnet, daß sie das Hilfsmittel der allgemeinen Formel I in einer Menge von 15 bis 45 Gew. % enthält.

5. Farbstoffzubereitung gemäß Anspruch 1, dadurch gekennzeichnet, daß der Farbstoffgehalt 15 bis 50 Gew.%, vorzugsweise 20 - 40 Gew.% beträgt.

6. Hilfsmittel zur Herstellung stabiler Farbstoffzubereitungen der allgemeinen Formel I

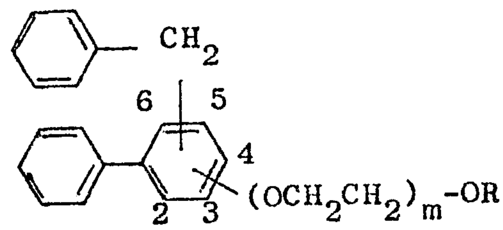

worin der Substituent $-(OCH_2CH_2)_m-OR$ in 2 oder 4-Stellung des Diphenyls steht, m eine Zahl von 7 bis 20 und R zu 60 bis 95 % Wasserstoff und zu 40 bis 5 % ein Rest der Formel II.

$$-C_nH_{2n}-COO^{\ominus}\ X^{\oplus} \qquad (II)$$

bedeutet, wobei n eine Zahl von 1 bis 4 ist und X für Wasserstoff, ein Alkalimetallkation, $NH_4^{\oplus}$, ein Mono-, Di- oder Trialkyl- oder hydroxyalkylammoniumkation mit 1 bis 4 C-Atomen in den Alkylgruppen steht.

7. Verfahren zur Herstellung der stabilen Farbstoffzubereitungen des Anspruchs 1 durch Mahlen eines Gemisches von in Wasser schwerlöslichen oder unlöslichen Farbstoffen, Wasser, eines oder mehrerer bekannter und üblicher Zusatzstoffe, wie Dispergier-, Netz- und Konservierungsmitteln auf an sich bekannten Mahleinrichtungen, dadurch gekennzeichnet, daß die Mahlung in Gegenwart von 5 bis 75 Gew.% , bezogen auf das Gewicht des Farbstoffs, Hilfsmitteln der in Anspruch 1 angegebenen Formel I erfolgt.

8. Verfahren zur Herstellung des Hilfsmittels des Anspruchs 6, dadurch gekennzeichnet, daß man eine Verbindung der Formel I

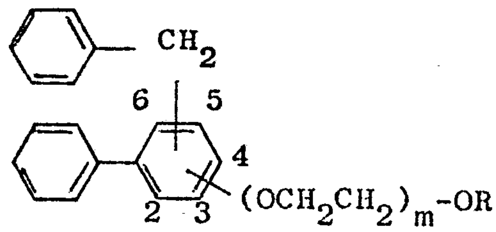

(I)

worin der Substituent $-(OCH_2CH_2)_m-OR$ in 2 oder 4-Stellung des Diphenyls steht, m eine Zahl von 7 bis 20 ist und R für Wasserstoff steht, ohne Lösungsmittel, in Wasser oder in einem wassermischbaren organischen Lösungsmittel bei 20 bis 100°C mit 0,95 bis 0,05 Mol pro Mol Verbindung der Formel I, einer Halogencarbonsäure bzw. deren Salzen der Formel III

$$Hal-C_nH_{2n}-COO^{\ominus}\ X^{\oplus} \qquad (III)$$

worin Hal ein Halogenatom, vorzugsweise Chlor oder Brom, ist und $X^{\oplus}$ die im Anspruch 6 angegebenen Bedeutungen hat, in Gegenwart von 2 Mol Alkali/Mol Halogencarbonsäure umsetzt und anschließend das Reaktionsprodukt in an sich bekannter Weise auf das Salz oder die freie Karbonsäure aufarbeitet.

9. Verfahren zur Herstellung des Hilfsmittels des Anspruchs 6, dadurch gekennzeichnet, daß man 1 Mol-Teil einer Verbindung der Formel I, worin R ein Rest der Formel II ist, gegebenenfalls mit bis zu 20 Mol-Teilen einer Verbindung der Formel I, worin R Wasserstoff ist, und Wasser und/oder einem mit Wasser mischbaren organischen Lösungsmittel, vorzugsweise einem niederen Alkanol homogenisiert.

10. Neue Verbindungen der Formel IV

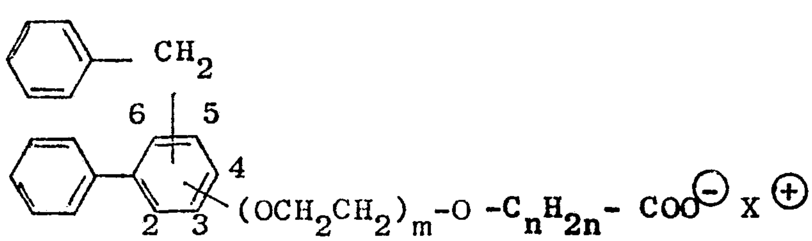

worin der Substituent $-(OCH_2CH_2)_m-O-C_nH_{2n}-COO^{\ominus}\ X^{\oplus}$ in 2 oder 4-Stellung des Diphenyls steht, m eine Zahl von 7 bis 20 und n eine Zahl von 1 bis 4 ist und X für Wasserstoff, ein Alkalimetallkation, $NH_4^{\oplus}$, ein Mono-, Di- oder Trialkyl- oder Hydroxyalkylammoniumkation mit 1 bis 4 C-Atomen in den Alkylgruppen steht.

11. Verfahren zur Herstellung neuer Verbindungen, der im Anspruch 12 angegebenen Formel IV, dadurch gekennzeichnet, daß man eine Verbindung der Formel V

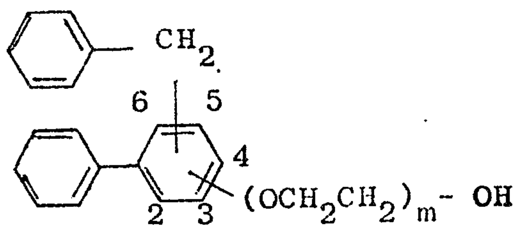

(V)

worin der Substituent $-(OCH_2CH_2)_m-OH$ in 2 oder 4-Stellung des Diphenyls steht und m eine Zahl von 7 bis 20 bedeutet mit 1 bis 2 Mol pro Mol Verbindung der Formel V einer Halogencarbonsäure bzw. deren Salzen der Formel III

$$Hal-C_nH_{2n}-COO^{\ominus} X^{\oplus} \qquad (III)$$

umsetzt und anschließend das Reaktionsprodukt in an sich bekannter Weise auf das Salz oder die freie Karbonsäure aufarbeitet.

12. Verwendung der stabilen Farbstoffzubereitungen zum colorieren von Textilmaterialien bestehend aus oder enthaltend hydrophobe Fasern, insbesondere Polyesterfasern durch Färben nach üblichen Färbeprozessen, insbesondere dem HT-Färbeverfahren, Bedrucken und Fixieren des Farbstoffs durch anschließende Hitzebehandlung oder Thermo-Umdruckverfahren.